# EUROPÄISCHE PATENTSCHRIFT

(11) **EP 1 746 313 B1**
(45) Veröffentlichungstag und Bekanntmachung des Hinweises auf die Patenterteilung: **20.01.2010**
(21) Anmeldenummer: 05015958.1
(22) Anmeldetag: 22.07.2005
(51) Int. Cl.: F16H 63/36

(54) **Schaltsperreinrichtung für Schaltgetriebe**
Shift lock mechanism for gearbox
Mécanisme de verrouillage pour commande de changement de vitesse d'une boîte de vitesse

(43) Veröffentlichungstag der Anmeldung: 24.01.2007
(73) Patentinhaber: Hoerbiger Antriebstechnik GmbH, 86956 Schongau (DE)
(72) Erfinder: De Mazière, Filip, 9070 Heusden (BE); Genouw, Didier, 8480 Eernegem (BE)
(74) Vertreter: Kitzhofer, Thomas

(56) Entgegenhaltungen:
- EP-A- 0 476 005
- EP-A- 1 236 936
- GB-A- 774 824
- GB-A- 191 514 688

## Beschreibung

Die Erfindung betrifft ein Schaltgetriebe gemäß dem Oberbegriff des Anspruches 1 sowie dem Oberbegriff des Anspruches 4, einer weiteren Ausführungsform des Getriebes. Ein derartiges Schaltgestriebe ist aus der EP 0 476 005 A bekannt, die den nächstliegenden Stand der Technik darstellt.

In Schaltgetrieben ist es aus Sicherheitsgründen erforderlich, dass jeweils nur ein Gang im Leistungsfluss geschaltet ist. Die übrigen Gänge werden durch entsprechende Verriegelungen gegen fehlerhaftes Einlegen gesichert.

Die Verriegelungen erfolgen in bekannten Ausführungen zwischen den Elementen, die zur Betätigung der Schiebemuffen bewegt werden. Dies können Schaltstangen, Schaltschienen oder Schaltwellen sein. Sie werden mit dem Einlegen eines Ganges relativ zum Gehäuse oder zu einem gehäusefesten Teil verriegelt.

Konstruktionsbedingt ist es dabei immer erforderlich, dass zwischen den jeweiligen Betätigungselementen, wie beispielsweise den Schaltstangen, eine mechanische Wirkverbindung besteht.

In Mehrwellengetrieben ist es aus Package-Gründen jedoch nicht immer möglich, die Elemente zur Schaltbetätigung im Gehäuse so anzuordnen, dass eine mechanische Wirkverbindung zur gegenseitigen Verriegelung einfach realisiert werden kann. Zur gegenseitigen Verriegelung weit auseinander liegender Schaltstangen wäre daher ein aufwändiger Mechanismus erforderlich, der aus Kosten-, Gewichts- und auch Toleranzgründen nachteilig wäre.

Es ist daher Aufgabe der vorliegenden Erfindung, ein Schaltgetriebe sowie eine Verriegelungseinrichtung der im Oberbegriff des Anspruches 9 angegebenen Art zu schaffen, die auch für Getriebeauslegungen mit räumlich auseinander liegenden Schaltbetätigungselementen eine einfache Verriegelungsmöglichkeit ergeben und die insbesondere die Funktion des Verhinderns des Einlegens eines weiteren Ganges in den Momentenfluss sicher erfüllen.

Die Lösung dieser Aufgabe erfolgt durch die Merkmale des Anspruches 1 bzw. des Anspruches 4.

Während in Mehrwellengetrieben die Schaltbetätigungselemente räumlich weit entfernt angeordnet sein können, liegen die zu betätigenden Schiebemuffen nahe zu immer nahe beieinander. Dieser Umstand wird erfindungsgemäß auf besonders vorteilhafte und einfache Weise dadurch ausgenutzt, dass die Schiebemuffen mittels der erfindungsgemäßen Verriegelungseinrichtung direkt gegeneinander verriegelt werden.

Bei einer ersten Ausführungsform des erfindungsgemäßen Schaltgetriebes bzw. der erfindungsgemäßen Verriegelungseinrichtung wird auf einer Führung mindestens ein Riegelelement so angeordnet, dass bei der Betätigung einer der Schiebemuffen auf der zugeordneten Getriebewelle aus der Neutralposition heraus das Riegelelement in Richtung auf die auf der gegenüberliegenden Getriebewelle befindlichen Schiebemuffe radial verschoben wird. Die Formgebung des Riegelelementes ist hierbei so gewählt, dass die zu verriegelnde Schiebemuffe so lange in der Neutralposition axial fixiert wird, so lange sich die betätigte Schiebemuffe außerhalb ihrer Neutralposition befindet. Das Einschalten eines Ganges mittels der verriegelten Schiebemuffe wird dadurch wirksam verhindert.

Das Riegelelement selbst stützt sich über eine geeignete, vom Schaltbetätigungselement unabhängige Führung zum feststehenden Getriebegehäuse ab. Das Riegelelement kann eine translatorische Bewegung ausführen. Die Schiebemuffe und das Riegelelement sind jeweils so ausgeführt, dass eine axiale Verschiebung einer Schiebemuffe eine senkrecht dazu stehende, translatorische Bewegung des Riegelelementes bewirkt, ein Zurückschieben des Riegels durch eine Krafteinleitung über die zweite verriegelte Schiebemuffe jedoch verhindert wird.

Umgekehrt wird, solange sich die zuvor betätigte Schiebemuffe wieder in ihrer Neutralposition befindet, bei Betätigung der jeweils anderen Schiebemuffe das Riegelelement entgegengesetzt radial verschoben und somit die sich in ihrer Neutralposition befindende Schiebemuffe verriegelt.

Bei einer alternativen Ausführungsform kann das Riegelelement auf einer Führung schwenkbar gelagert werden. Bei dieser Ausführungsform wird durch Betätigung einer der Schiebemuffen das Riegelelement derartig um seine Führung gedreht, dass die jeweils andere Schiebemuffe verriegelt wird. Die Schiebemuffe und das Riegelelement sind dabei so ausgeführt, dass eine axiale Verschiebung einer Schiebemuffe eine Rotation des Riegelelementes bewirkt, ein Zurückschieben des Riegelelementes durch eine Krafteinleitung über die andere Schiebemuffe jedoch verhindert wird, solange die betätigte Schiebemuffe vollständig aus der Neutralposition heraus verschoben ist.

Somit können beide zuvor beschriebenen Ausführungsformen sicher das fehlerhafte Schalten eines weiteren Ganges bei bestehendem Momentenfluss verhindern.

Die Unteransprüche 2, 3 und 5-7 haben vorteilhafte Weiterbildungen des erfindungsgemäßen Schaltgetriebes zum Inhalt.

Weitere Einzelheiten, Merkmale und Vorteile der Erfindung ergeben sich aus nachfolgender Beschreibung von Ausführungsbeispielen anhand der Zeichnungen.

Es zeigt:
Fig. 1 eine schematische leicht vereinfachte Darstellung einer Ausführungsform eines erfindungsgemäßen Schaltgetriebes,
Fig. 2 eine Detailansicht des Getriebes gemäß Fig. 1 zur Erläuterung einer ersten Ausführungsform der erfindungsgemäßen Verriegelungseinrichtung,
Fig. 3 eine Frontansicht einer zweiten Ausführungsform der erfindungsgemäßen Verriegelungseinrichtung,
Fig. 4 eine perspektivische Darstellung der Verriegelungseinrichtung gemäß Fig. 3, und
Fig. 5 und 6 Draufsichten auf die Verriegelungseinrichtung gemäß den Fig. 3 und 4 sowie einer alternativen Ausführungsform dieser Verriegelungseinrichtung.

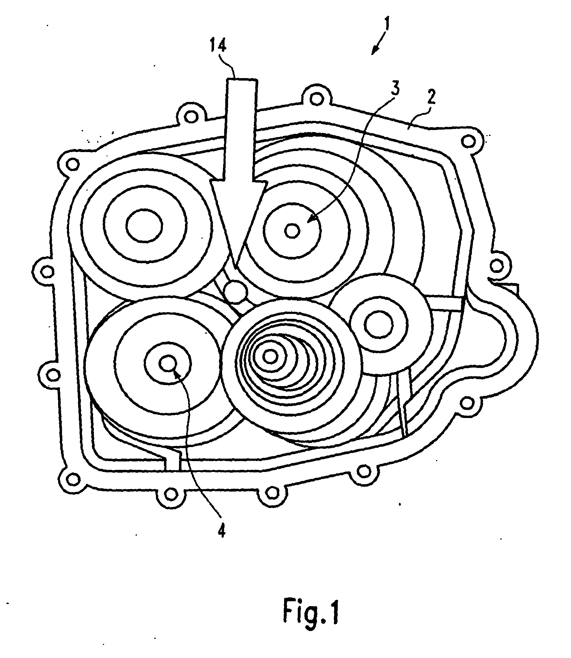

In Fig. 1 ist ein erfindungsgemäßes Schaltgetriebe 1, insbesondere in Form eines Automatikgetriebes oder eines automatisierten Schaltgetriebes, schematisch leicht vereinfacht dargestellt, um die Lage der erfindungsgemäßen Verriegelungseinrichtung 14 innerhalb des Getriebes verdeutlichen zu können. Das Schaltgetriebe 1 weist ein Getriebegehäuse 2 auf, in dem im Beispielsfalle zwei Getriebewellen 3 und 4 angeordnet sind.

Die durch den Punkt repräsentierte Verriegelungseinrichtung 14 ist zwischen den Getriebewellen 3 und 4 angeordnet, so dass eine gegenseitige Verriegelung der auf den Getriebewellen 3 und 4 angeordneten Schiebemuffen möglich gemacht wird, was nachfolgend näher erläutert wird. Es versteht sich, dass das Schaltgetriebe 1 alle sonstigen Komponenten eines Schaltgetriebes aufweist, deren Beschreibung hier jedoch weggelassen wird, da sie für die Erläuterung der Prinzipien der vorliegenden Erfindung keine Rolle spielen.

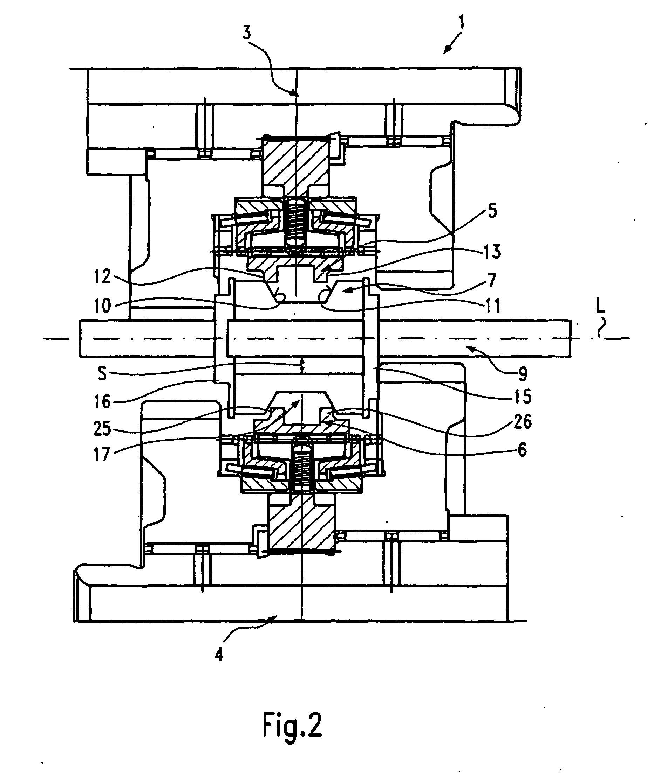

Fig. 2 zeigt eine Detailansicht des erfindungsgemäßen Schaltgetriebes 1, aus der wiederum die Getriebewellen 3 und 4 ersichtlich sind, die beabstandet zueinander parallel verlaufen. Auf der Getriebewelle 3 ist eine Schiebemuffe 5 und auf der Getriebewelle 4 ist eine Schiebemuffe 6 angeordnet. Zwischen den Getriebewellen 3 und 4 ist eine Führung 9 angeordnet, die als Führungsstange ausgebildet sein kann, beispielsweise mit rundem Querschnitt, und die im Getriebegehäuse 2 abgestützt ist. Auf der Führungsstange 9 ist bei der in Fig. 2 dargestellten ersten Ausführungsform der erfindungsgemäßen Verriegelungseinrichtung 14 bzw. des erfindungsgemäßen Getriebes 1 ein Riegelelement 7 angeordnet, das über Fixierungselemente 15 und 16 auf der Führungsstange 9 gehalten ist, so dass das Riegelelement 7 entlang der Längsachse L der Führungsstange 9 unverschieblich auf dieser angeordnet ist.

Wie Fig. 2 verdeutlicht, ist das Riegelelement 7 jedoch radial translatorisch verschieblich, da es mit einem Spiel S auf der Führungsstange 9 angeordnet ist, so dass eine Bewegung quer zur Erstreckung der Längsachse L möglich ist.

Zur Ausführung einer derartigen Bewegung weist das Riegelelement 7 Führungsflächen 10 und 11 auf, die bei der dargestellten Ausführungsform Teil einer kegelstumpfförmigen Nut 17 im Riegelelement 7 sind.

Diese Führungsflächen 10 und 11 können mit entsprechenden Gegenflächen 12 und 13 der Schiebemuffe 5 bzw. 25 und 26 der Schiebemuffe 6 in Wirkverbindung treten. Bei den dargestellten Ausführungsformen sind die Führungsflächen 10, 11 geneigt ausgebildet, so dass sich bei einer Verschiebung einer der Schiebemuffen, wie in Fig. 2 der Schiebemuffe 5 entlang der zugeordneten Getriebewelle 3 eine Relativbewegung aufgrund des Eingriffes zwischen den Führungsflächen und den Gegenflächen ergibt, die bei der in Fig. 2 dargestellten Verschiebung der Schiebemuffe 5 zu einer Bewegung des Riegelelements 7 nach unten auf die Schiebemuffe 6 zu führt, da das Riegelelement axial unverschieblich ist. Hierdurch ergibt sich eine Fixierung der Schiebemuffe 6 in ihrer Neutralposition, da aufgrund der translatorisch quergerichteten Verschiebung des Riegelelementes 7 in die in Fig. 2 dargestellte Stellung dann die Führungsflächen 10 und 11 und die zugeordneten Gegenflächen 25 und 26 zu einer Verklemmung führen, die sicherstellt, dass selbst beim Aufbringen von Kräften auf die Schiebemuffe 6 diese sicher in ihrer Neutralposition gehalten werden kann, so lange die Schiebemuffe 5 außerhalb ihrer Neutralposition angeordnet ist, so dass das ungewollte Einlegen eines zweiten Ganges sicher verhindert wird.

Wenn die Schiebemuffe 5 in ihre Neutralposition zurückgekehrt ist und die Schiebemuffe 6 betätigt wird, erfolgt in entsprechender Art und Weise eine translatorische Bewegung des Riegelelementes in Fig. 2 nach oben, also wiederum quer zur Längserstreckung der Längsachse L, so dass dann die Schiebemuffe 5 durch Verklemmung der Führungs- und Gegenflächen in ihrer Neutralposition fixierbar ist, so lange die Schiebemuffe 6 außerhalb ihrer Neutralposition angeordnet ist.

Obwohl bei der in Fig. 2 dargestellten Ausführungsform die Führungsflächen 10 und 11 geneigt sind, ist es natürlich auch möglich, dass die entsprechenden Gegenflächen der Schiebemuffen 5 und 6 geneigt ausgeführt sind, da auch durch eine solche Ausbildung und Anordnung die zuvor beschriebene Relativbewegung des Riegelelements 7 bei axialer Bewegung einer der Schiebemuffen 5 oder 6 möglich ist.

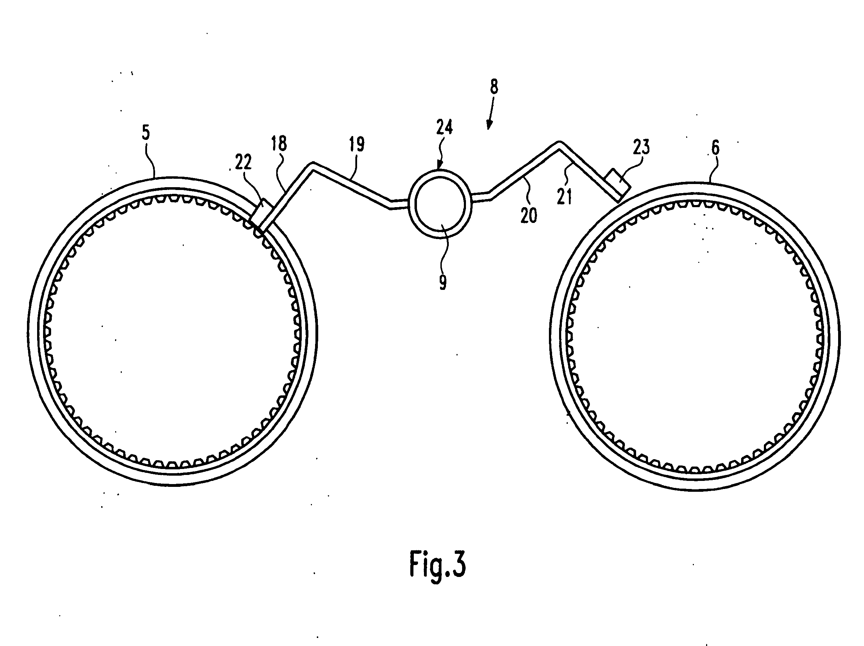

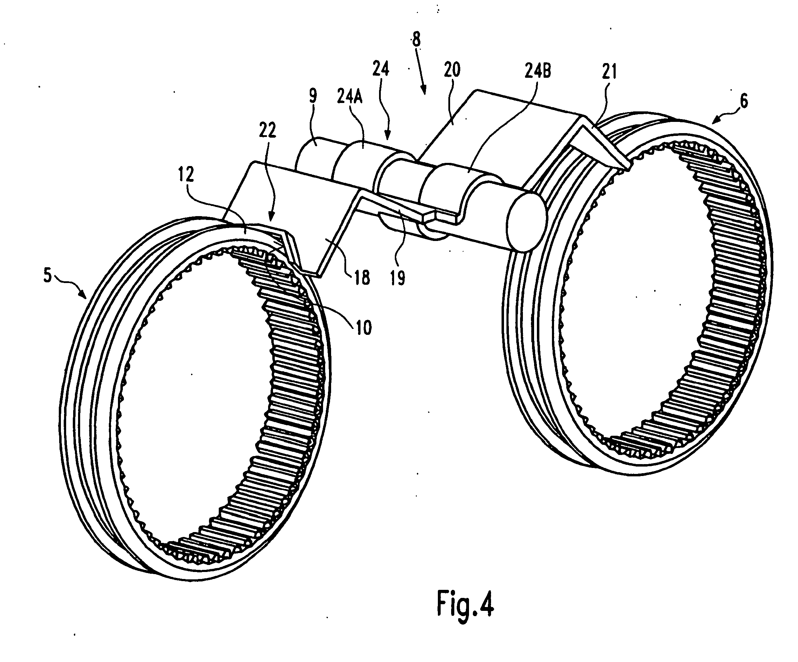

In den Fig. 3 und 4 ist eine alternative Ausführungsform des Riegelelementes dargestellt, das in diesen Figuren mit der Bezugsziffer 8 gekennzeichnet ist.

Bei dieser Ausführungsform ist das Riegelelement als Wippe ausgebildet und schwenkbeweglich um die Führungsstange 9 herum angeordnet. Wie insbesondere die Fig. 3 verdeutlicht, hat bei dieser Ausführungsform das als Wippe ausgebildete Riegelelement 8 eine M-ähnliche Konfiguration und weist dementsprechend im spitzen Winkel zueinander angeordnete Wippenarme 18 und 19 bzw. 20 und 21 auf, an deren freien Enden Eingriffsbereiche 22 bzw. 23 angeordnet sind. Zwischen den Wippenarmenpaaren ist eine Schwenkführung 24 angeordnet, die auf der Führungsstange 9 mit rundem Querschnitt gelagert ist.

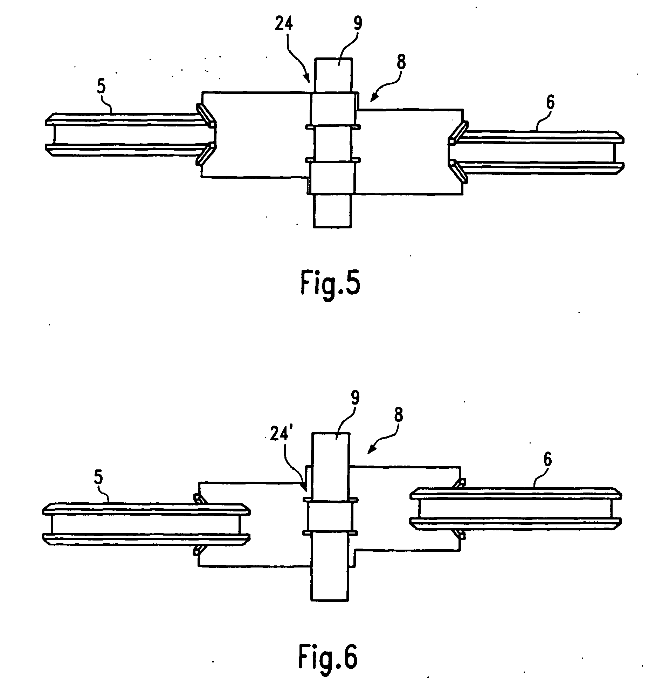

Die perspektivische Darstellung der Fig. 4 zeigt, dass bei dieser Ausführungsform, die in Draufsicht auch in Fig. 5 veranschaulicht ist, die Schwenkführung 24 zwei nebeneinander angeordnete Führungsbereiche 24a und 24b aufweist.

Fig. 4 verdeutlicht ferner den Wirkmechanismus der auch bei dieser Ausführungsform vorgesehenen Führungsflächen des Riegelelementes 8, von denen aufgrund der gewählten Darstellung nur die Führungsfläche 10 sichtbar ist. Diese wirkt mit einer Gegenfläche 12 der Schiebemuffe 5 zusammen. Entsprechend ist ein Eingriffsbereich 23 des Wippenarms 21 ausgebildet, was jedoch aufgrund der gewählten Darstellung in Fig. 4 nicht näher sichtbar ist.

Fig. 4 verdeutlicht jedoch, dass bei dieser Ausführungsform die Führungsfläche 10 geneigt ausgebildet ist und Teil einer wiederum kegelstumpfförmigen Nut im Wippenarm 18 ist.

Dementsprechend ergibt sich die Möglichkeit einer Schwenkbewegung bei axialer Verschiebung einer der beiden Schiebemuffen 5 und 6 durch die sich ergebende Relativbewegung zwischen den Führungs- und Gegenflächen; so dass je nachdem, welche der beiden Schiebemuffen axial aus ihrer Neutralposition heraus bewegt wird, das axial unverschiebliche Riegelelement 8 um die Führungsstange 9 geschwenkt wird, und dementsprechend der entsprechende Eingriffsbereich 22 bzw. 23 in Wirkverbindung mit der zugeordneten Schiebemuffe 5 bzw. 6 tritt, und diese wiederum durch Aufbau einer Klemmkraft in ihrer Neutralposition sichert. Bei der Darstellung der Fig. 3 ist die Schiebemuffe 5 in ihrer Neutralposition gesichert, da sich der Eingriffsbereich 22 in Eingriff mit den zugeordneten Schiebemuffenflachen befindet.

Bei Betätigung der jeweils anderen Schiebemuffe ergibt sich eine Drehung in die andere Richtung, so dass dann die gegenüberliegende andere Schiebemuffe in der Neutralposition gesichert wird.

Fig. 6 zeigt ergänzend eine Ausführungsform eines Riegelelementes 8', die eine Schwenkführung 24' mit lediglich einem Schwenkbereich aufweist, der auf der Führungsstange 9 angeordnet ist. Ansonsten entspricht die Wirkungsweise dieser Ausführungsform der zuvor erläuterten Wirkungsweise der Ausführungsform gemäß Fig. 3 bis 5.

Die erfindungsgemäße Verriegelungseinrichtung 14 macht es somit auf äußerst einfache Art und Weise möglich, die Schiebemuffen unmittelbar zu verriegeln, um zu verhindern, dass im Momentenfluss ein weiterer oder mehrere weitere Gänge eingelegt werden. Sowohl bei der zuvor erläuterten translatorischen Bewegung des Riegelelementes als auch der Schwenkbewegung des Riegelelementes erfolgt die Verriegelung zumindest einer zweiten Schiebemuffe relativ zum Gehäuse, so dass eine einfach aufgebaute und sicher wirkende Verriegelungseinrichtung selbst bei weit auseinander liegenden Schaltstangen, Schaltschienen oder Schaltwellen durch die Prinzipien vorliegender Erfindung erreicht werden kann.

### Bezugszeichenliste

- 1: Schaltgetriebe, insbesondere automatisiertes
Schaltgetriebe
- 2: Getriebegehäuse
- 3, 4: Getriebewelle
- 5,6: Schiebemuffen
- 7,8, 8': Riegelelement
- 9: Führung, Führungsstange
- 10, 11: Führungsfläche
- 12, 13, 25, 26: Gegenfläche
- 14: Verriegelungseinrichtung
- 15, 16: Fixierungselement
- 17: kegelstumpfförmige Nut
- 18, 19, 20, 21: Wippenarme
- 22, 23: Eingriffsbereich
- 24, 24': Schwenkführung
- 24a, 24b: Schenkführungsbereiche

## Patentansprüche

1. Schaltgetriebe (1)
- mit einem Getriebegehäuse (2);
- mit zumindest zwei benachbarten im Getriebegehäuse angeordneten Getriebewellen (3, 4); und
- mit je einer Schiebemuffe (5,6) pro Getriebewelle (3, 4), und
- mit zumindest einem Riegelelement (7; 8), das auf einer am Getriebegehäuse (2) abgestützten Führung (9) angeordnet ist und das durch Verschiebung einer (5) der Schiebemuffen (5,6) die jeweils andere (6) der Schiebemuffen (5,6) gegen eine axiale Verschiebung auf ihrer Getriebewelle (4) aus der Neutralposition heraus verriegelt,
**dadurch gekennzeichnet,**
- **dass** das Riegelelement (7) axial auf der Führung (9) fixiert ist und quer zur Längsachse (L) der Führung (9) mit Spiel (S) geführt ist.

2. Schaltgetriebe nach Anspruch 1, **dadurch gekennzeichnet, dass** das Riegelelement (7) zumindest eine Führungsfläche (10, 11) aufweist, die mit zumindest einer Gegenfläche (12, 13; 25, 26) an der Schiebemuffe (5 bzw. 6) zur Erzeugung einer translatorischen Verriegelungsbewegung quer zur Längsache (L) der Führung (9) in Richtung auf die zu verriegelnde Schiebemuffe (5 bzw. 6) bei axialer Schaltbewegung der jeweils anderen Schiebemuffe (6, 5) in Wirkverbindung bringbar ist.

3. Schaltgetriebe nach Anspruch 1, **dadurch gekennzeichnet, dass** das Riegelelement (8) schwenkbar auf der Führung (9) angeordnet ist.

4. Schaltgetriebe (1)
- mit einem Getriebegehäuse (2);
- mit zumindest zwei benachbarten im Getriebegehäuse angeordneten Getriebewellen (3, 4); und
- mit je einer Schiebemuffe (5,6) pro Getriebewelle (3, 4), und
- mit zumindest einem Riegelelement (7; 8), das auf einer am Getriebegehäuse (2) abgestützten Führung (9) angeordnet ist und das durch Verschiebung einer (5) der Schiebemuffen (5,6) die jeweils andere (6) der Schiebemuffen (5,6) gegen eine axiale Verschiebung auf ihrer Getriebewelle (4) aus der Neutralposition heraus verriegelt,
**dadurch gekennzeichnet,**
- **dass** das Riegelelement (8) zumindest eine Führungsfläche (10) aufweist, die mit zumindest einer Gegenfläche (12) an der Schiebemuffe (5 bzw. 6) zur Erzeugung einer Schwenk-Verriegelungsbewegung um die Führung (9) in Richtung auf die zu verriegelnde Schiebemuffe (5, 6) bei axialer Schaltbewegung der jeweils anderen Schiebemuffe (6, 5) in Wirkverbindung bringbar ist.

5. Schaltgetriebe nach Anspruch 3 oder 4, **dadurch gekennzeichnet, dass** das Riegelelement (8) als annähernd M-förmig geformte Wippe ausgebildet ist.

6. Schaltgetriebe nach einem der Ansprüche 1 bis 5, **dadurch gekennzeichnet, dass** die Führung (9) zwischen den Getriebewellen (3, 4) im Getriebegehäuse (2) angeordnet ist.

7. Schaltgetriebe nach einem der Ansprüche 1 bis 6, **dadurch gekennzeichnet, dass** die Führung (9) als Führungsstange ausgebildet ist.

## Claims

1. A manual gearbox (1) comprising
- a gearbox casing (2);
- at least two adjacent gearbox shafts (3, 4) arranged in the gearbox casing; and
- one respective sliding collar (5, 6) for each gearbox shaft (3, 4); and
- at least one locking member (7; 8) which is arranged on a guide (9) supported at the gearbox casing (2) and which, by displacement of one (5) of the sliding collars (5, 6) locks the respective other one (6) of the sliding collars (5, 6) against an axial displacement on its gearbox shaft (4) from the neutral position,
**characterized in that**
- the locking member (7) is axially fixed in place on the guide (9) and is guided with play (S) transversely to the longitudinal axis (L) of the guide (9).

2. The manual gearbox according to claim 1, **characterized in that** the locking member (7) includes at least one guide surface (10, 11) which is adapted to be operatively connected with at least one opposite surface (12, 13; 25, 26) on the sliding collar (5 and 6, respectively) to produce a translational locking movement transversely to the longitudinal axis (L) of the guide (9) towards the sliding collar (5 or 6) to be locked upon an axial shifting movement of the respective other sliding collar (6, 5).

3. The manual gearbox according to claim 1, **characterized in that** the locking member (8) is arranged on the guide (9) for swiveling motion.

4. A manual gearbox (1) comprising
- a gearbox casing (2);
- at least two adjacent gearbox shafts (3, 4) arranged in the gearbox casing; and
- one respective sliding collar (5, 6) for each gearbox shaft (3, 4); and
- at least one locking member (7; 8) which is arranged on a guide (9) supported at the gearbox casing (2) and which, by displacement of one (5) of the sliding collars (5, 6) locks the respective other one (6) of the sliding collars (5, 6) against an axial displacement on its gearbox shaft (4) from the neutral position,
**characterized in that**
- the locking member (8) includes at least one guide surface (10) which is adapted to be operatively connected with at least one opposite surface (12) on the sliding collar (5 or 6) to produce a swiveling locking movement about the guide (9) towards the sliding collar (5, 6) to be locked upon an axial shifting movement of the respective other sliding collar (6, 5).

5. The manual gearbox according to claim 3 or 4, **characterized in that** the locking member (8) is configured in the form of an approximately M-shaped rocker.

6. The manual gearbox according to any of claims 1 to 5, **characterized in that** the guide (9) is arranged between the gearbox shafts (3, 4) in the gearbox casing (2).

7. The manual gearbox according to any of claims 1 to 6, **characterized in that** the guide (9) is configured as a guide bar.

## Revendications

1. Boîte de vitesses (1) comportant
- un carter (2) de boîte de vitesses ;
- au moins deux arbres (3, 4) de boîte de vitesses adjacents agencés dans le carter de boîte de vitesses ;
- un manchon coulissant (5, 6) respectif pour chaque arbre (3, 4) de boîte de vitesses, et
- au moins un élément de verrouillage (7 ; 8) qui est agencé sur un guidage (9) en appui sur le carter (2) de boîte de vitesses et qui par déplacement de l'un (5) des manchons coulissants (5, 6) verrouille l'autre manchon coulissant respectif (6) des manchons coulissants (5, 6) contre un déplacement axial sur son arbre (4) de boîte de vitesses de la position neutre,
**caractérisé en ce que**
- l'élément de verrouillage (7) est fixé axialement sur le guidage (9) et est guidé avec jeu (S) transversalement à l'axe longitudinal (L) du guidage (9).

2. Boîte de vitesses selon la revendication 1, **caractérisé en ce que** l'élément de verrouillage (7) comporte au moins une surface de guidage (10, 11) qui peut être amenée en liaison fonctionnelle avec au moins une surface antagoniste (12, 13 ; 25, 26) sur le manchon coulissant (5 ou 6, respectivement) pour générer un mouvement de translation de verrouillage transversalement à l'axe longitudinal (L) du guidage (9) en direction du manchon coulissant (5 ou 6, respectivement) à verrouillé lors d'un mouvement.axial de passage de vitesse de l'autre manchon coulissant respectif (6, 5).

3. Boîte de vitesses selon la revendication 1, **caractérisé en ce que** le l'élément de verrouillage (8) est agencé pivotant sur le guidage (9).

4. Boîte de vitesses (1) comportant
- un carter (2) de boîte de vitesses ;
- au moins deux arbres (3 ; 4) de boîte de vitesses adjacents agencés dans le carter de boîte de vitesses ;
- un manchon coulissant (5, 6) respectif pour chaque arbre (3, 4) de boîte de vitesses, et
- au moins un élément de verrouillage (7 ; 8) qui est agencé sur un guidage (9) en appui sur le carter (2) de boîte de vitesses et qui par déplacement de l'un (5) des manchons coulissants (5, 6) verrouille l'autre manchon coulissant respectif (6) des manchons coulissants (5, 6) contre un déplacement axial sur son arbre (4) de boîte de vitesses de la position neutre,
**caractérisé en ce que**
- l'élément de verrouillage (8) comporte au moins une surface de guidage (10) qui peut être amenée en liaison fonctionnelle avec au moins une surface antagoniste (12) sur le manchon coulissant (5 ou 6, respectivement) pour générer un mouvement pivotant de verrouillage autour du guidage (9) en direction du manchon coulissant (5,6) à verrouillé lors d'un mouvement axial de passage de vitesse de l'autre manchon coulissant respectif (6, 5).

5. Boîte de vitesses selon la revendication 3 ou 4, **caractérisé en ce que** l'élément de verrouillage (8) est réalisé sous forme de bascule approximativement en forme de M.

6. Boîte de vitesses selon l'une des revendications 1 à 5, **caractérisé en ce que** le guidage (9) est agencé dans le carter (2) de boîte de vitesses entre les arbres (3, 4) de boîte de vitesses.

7. Boîte de vitesses selon l'une des revendications 1 à 6, **caractérisé en ce que** le guidage (9) est réalisé sous forme de tige de guidage.
